# EUROPEAN PATENT APPLICATION

(11) **EP 4 787 595 A1**
(43) Date of publication of application: **05.08.2026**
(21) Application number: 24870975.0
(22) Date of filing: 27.09.2024
(51) Int. Cl.: H01M 50/457, H01M 50/446, H01M 50/434, H01M 50/411, H01M 50/403, H01M 10/052, H01M 50/463, H01M 50/489

(54) **ASYMMETRIC COMPOSITE SEPARATOR, PREPARATION METHOD THEREFOR, AND SECONDARY BATTERY**

(30) Priority: 27.09.2023 CN 202311263722
(71) Applicant: SVOLT Energy Technology Co., Ltd., Changzhou, Jiangsu 213200 (CN)
(72) Inventor: JIAO, Lingkuan, hangzhou, Jiangsu 213200 (CN); CHEN, Hui, hangzhou, Jiangsu 213200 (CN); YANG, Yingli, hangzhou, Jiangsu 213200 (CN); ZHANG, Zhongdong, hangzhou, Jiangsu 213200 (CN); SHENG, Jie, hangzhou, Jiangsu 213200 (CN); YANG, Hongxin, hangzhou, Jiangsu 213200 (CN)
(74) Representative: Michalski Hüttermann & Partner mbB
(86) International application number: PCT/CN2024/121796
(87) International publication number: WO 2025/067438

(57) **Abstract**

An asymmetric composite separator, a preparation method therefor, and a secondary battery. The asymmetric composite separator comprises a base film, a first coating disposed on one side of the base film, and a second coating disposed on the other side of the base film; the first coating comprises a first spherical material grafted with a hydrophilic group, and the second coating comprises a combination of ceramic particles and a second spherical material. The symmetrical composite separator can satisfy bonding requirements of a separator with regard to a negative electrode and a positive electrode in a thermal compounding process, as well as avoid any problems of rollers sticking during a preparation process. In addition, a thermal composite process lithium battery, prepared based on the asymmetric separator, when fully charged and disassembled, has uniform negative electrode interface and does not have problems of material falling, and the cycle performance of the battery is also improved.

## Description

The present disclosure claims priority to Chinese Patent Application No. 202311263722.1, filed with the China National Intellectual Property Administration on September 27, 2023, the contents of which are incorporated herein by reference in entirety.

### TECHNICAL FIELD

The present disclosure belongs to the technical field of separator materials, and specifically relates to an asymmetric composite separator, a preparation method therefor, and a secondary battery.

### BACKGROUND

The assembly processes of lithium batteries are mainly divided into a winding process and a lamination process. To further improve the production efficiency of batteries, the prior art discloses the development of a thermal composite lamination process on the basis of the traditional lamination process.

The specific flow of the thermal composite lamination process is as follows: first, the separator and the negative electrode are bonded by hot-roll pressing, and then cut to form a sandwich structure in which the negative electrode is covered by two layers of separators; second, the material of the above sandwich structure is laminated with the positive electrode to form an electrode assembly; finally, the electrode assembly is subjected to flat-plate hot pressing for bonding, so as to improve the hardness of the electrode assembly for subsequent circulation. Compared with the traditional lamination process, the thermal composite (lamination) process cancels the separate die-cutting process, and the lamination speed is increased by more than 50% compared with the traditional Z-shaped lamination process, which has become a development trend in the lithium battery industry.

At present, the separator used in the thermal composite process is generally prepared by solvent-based polyvinylidene fluoride coating or water-based polyvinylidene fluoride coating. In the manufacturing process, problems such as production abnormality caused by the polyvinylidene fluoride adhesive layer sticking to the roller or negative electrode material falling off caused by excessive bonding force between the separator and the electrode sheet are often encountered. Moreover, the cost of the solvent-based polyvinylidene fluoride coated separator is twice that of the common water-based separator. The above problems such as high cost and abnormal manufacturing process limit the large-scale application of the thermal composite process.

In addition, in the thermal composite process, hot-roll pressing is usually used to bond the separator and the negative electrode, and flat-plate hot pressing is used to bond the separator and the positive electrode. The different double-sided hot pressing methods lead to different use requirements for the adhesive coating in the separator. Most of the separator adhesive coatings used in the prior art adopt a symmetrical structure, and the adhesive layer design of the symmetrical structure can only fully meet the use requirements of one side electrode. For example, the following problems exist: if double-sided coated solvent-based polyvinylidene fluoride adhesive layers are adopted, the solvent-based polyvinylidene fluoride is prone to roller sticking problems. To avoid the above problems, a polyethylene terephthalate film is used to cover and hot-press the surface layer of the separator during use, but this increases the material production cost and equipment complexity; if double-sided sprayed water-based polyvinylidene fluoride adhesive layers are adopted, the coverage rate of the sprayed polyvinylidene fluoride is low, and the separator and the negative electrode cannot be well bonded, so it is necessary to increase the hot pressing pressure for compensation, and the increase of the hot pressing pressure increases the risk of short circuit caused by the separator being punctured by foreign matters; and if double-sided coated water-based polyvinylidene fluoride adhesive layers are adopted, since the volume of the negative electrode material changes continuously during the charge-discharge cycle of the battery, the active material is prone to fall off between the negative electrode material and the current collector, resulting in poor cycle performance of the battery.

Therefore, in the art, there is an urgent need to develop a composite separator that can avoid the above problems in the thermal composite process and meet the use requirements of the battery.

### SUMMARY

The following is an overview of the subject matter described in detail herein. This overview is not intended to limit the protection scope of the claims.

In view of the deficiencies of the prior art, the purpose of the present disclosure is to provide an asymmetric composite separator, a preparation method therefor, and a secondary battery. The asymmetric composite separator provided herein can simultaneously meet the adhesion requirements of the separator to the negative electrode and the positive electrode in the thermal composite process, without the problem of roller sticking during the preparation process. In addition, for a lithium battery prepared by the thermal composite process based on the asymmetric separator, not only is the negative electrode interface uniform without material falling off during disassembly at full charge, but the cycle performance of the battery is also greatly improved.

To achieve the objectives of the present application, the present disclosure adopts the following technical solutions:

In a first aspect, the present disclosure provides an asymmetric composite separator, which includes a base film, a first coating disposed on one side of the base film, and a second coating disposed on the other side of the base film;
the first coating includes a first spherical material grafted with hydrophilic groups; and
the second coating includes a combination of ceramic particles and a second spherical material.

To solve the technical problem that the separator in the prior art cannot fully meet the application requirements of the thermal composite process, the present disclosure designs a composite separator with an asymmetric structure. On the one hand, a first spherical material grafted with hydrophilic groups is disposed on the positive electrode side to reduce the surface energy and the adhesion of the adhesive layer to the hot roller. On the other hand, a combination of ceramic particles and a second spherical material is disposed on the negative electrode side to achieve adhesion between the separator and the negative electrode, while improving the heat resistance of the separator itself. In addition, the adhesion between the second spherical material and the negative electrode is point contact, and there is a certain distance between the points, so that when the volume of the negative electrode expands and changes during the battery cycle, space is left for stress release, thereby reducing the problem of negative electrode material falling off caused by stress concentration when the volume of the negative electrode changes.

The asymmetric composite separator provided herein can simultaneously meet the adhesion requirements of the separator to the negative electrode and the positive electrode in the thermal composite process, without the problem of roller sticking during the preparation process. In addition, for a lithium battery prepared by the thermal composite process based on the asymmetric separator, not only is the negative electrode interface uniform without material falling off during disassembly at full charge, but the cycle performance of the battery is also greatly improved.

In one embodiment, the average particle size of the first spherical material grafted with hydrophilic groups is 100-300 nm, such as 100 nm, 120 nm, 150 nm, 180 nm, 200 nm, 220 nm, 250 nm, 280 nm, 300 nm, etc.; further optionally 200 nm.

In the present disclosure, by adjusting the average particle size of the first spherical material, the coating height and the pore blocking effect of the coating material are controllable. Too small a particle size will cause pore blocking of the spherical material, affecting the internal resistance of the battery; on the contrary, too large a spherical size will lead to an excessively thick coating, making it difficult for the battery to be inserted into the casing.

In one embodiment, the monomer grafted with hydrophilic groups include a fluorine-containing monomer and a non-fluorine-containing monomer.

In one embodiment, the fluorine-containing monomer includes any one or a combination of at least two of polyvinylidene fluoride, polytetrafluoroethylene, polyvinyl chloride, ethylene-tetrafluoroethylene copolymer, polychlorotrifluoroethylene or chlorotrifluoroethylene copolymer.

In one embodiment, the non-fluorine-containing monomer includes any one or a combination of at least two of polymethyl methacrylate, polyethyl methacrylate, poly(methyl methacrylate-co-ethyl methacrylate), polybutyl methacrylate, styrene, phenylpropene, phenylpropanol, phenylpropanal or phenylpropionic acid.

In one embodiment, the grafting ratio of the first spherical material grafted with hydrophilic groups is 2-4%, such as 2%, 2.2%, 2.5%, 2.8%, 3%, 3.2%, 3.5%, 3.8%, 4%, etc.; further optionally 3%.

In the present disclosure, by adjusting the grafting ratio of the first spherical material, the adhesion of the material meets the requirement of no roller sticking. Too low a grafting ratio will cause the electrode assembly to be soft; on the contrary, it will cause the separator coating to stick to the roller.

In one embodiment, the coating areal density of the first spherical material grafted with hydrophilic groups in the first coating is 0.3-0.7 g/m², such as 0.3 g/m², 0.32 g/m², 0.35 g/m², 0.38 g/m², 0.4 g/m², 0.42 g/m², 0.45 g/m², 0.48 g/m², 0.5 g/m², 0.52 g/m², 0.55 g/m², 0.58 g/m², 0.6 g/m², 0.62 g/m², 0.65 g/m², 0.68 g/m², 0.7 g/m², etc.

In the present disclosure, by adjusting the coating areal density of the first spherical material, the asymmetric composite separator meets the requirements of adhesion and electrical performance. Too low a coating areal density will cause the electrode assembly to be soft; on the contrary, the coating will block pores, seriously affecting the internal resistance of the battery.

In one embodiment, the coating thickness of the first spherical material grafted with hydrophilic groups in the first coating is 0.5-1.5 µm, such as 0.5 µm, 0.6 µm, 0.7 µm, 0.8 µm, 0.9 µm, 1 µm, 1.1 µm, 1.2 µm, 1.3 µm, 1.4 µm, 1.5 µm, etc.

In the present disclosure, by adjusting the coating thickness of the first spherical material, the asymmetric composite separator meets the requirements of adhesion and electrode assembly thickness design. Too small a thickness will lead to insufficient contact between the coating and the electrode sheet during hot pressing, affecting the bonding performance; on the contrary, it will cause the separator to be too thick and the electrode assembly thickness to exceed the standard.

In one embodiment, the ceramic particles include any one or a combination of at least two of aluminum oxide, boehmite, magnesium oxide or lithium aluminum titanium phosphate.

In one embodiment, the average particle size of the second spherical material is 400-600 nm, such as 400 nm, 420 nm, 450 nm, 480 nm, 500 nm, 520 nm, 550 nm, 580 nm, 600 nm, etc.; further optionally 500 nm.

In the present disclosure, by adjusting the average particle size of the second spherical material, the asymmetric composite separator meets the bonding design. Too small a particle size will lead to complete embedding in the ceramic coating and fail to play a bonding role; on the contrary, too large adhesive particles are easy to fall off during use, resulting in the bonding performance failing to meet the use requirements.

In one embodiment, the second spherical material is distributed in the second coating in an island-like form.

In one embodiment, the coverage rate of the second spherical material in the second coating is 3-10%, such as 3%, 4%, 5%, 6%, 7%, 8%, 9%, 10%, etc.; further optionally 5%.

In the present disclosure, by adjusting the coverage rate of the second spherical material, the asymmetric composite separator meets the bonding design without affecting the electrolyte wettability. Too low a coverage rate will fail to play a bonding role; on the contrary, it will reduce the electrolyte wetting space and affect the wetting performance.

In one embodiment, the second spherical material includes non-fluorine-containing materials.

In one embodiment, the non-fluorine-containing material includes any one or a combination of at least two of styrene-acrylic compounds, polymethyl methacrylate, polyethyl methacrylate, poly(methyl methacrylate-co-ethyl methacrylate) or polybutyl methacrylate.

In one embodiment, the coating thickness of the ceramic particles in the second coating is 1.5-3 µm, such as 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, etc.; further optionally 3 µm.

In the present disclosure, by adjusting the coating thickness of the ceramic particles, the spherical material can form an island structure on the coating surface and is not easy to fall off. Too small a thickness will cause the spherical material to be exposed too much from the coating and easy to fall off; on the contrary, the spherical material will be embedded in the coating and an island structure fails to be formed.

In one embodiment, the coating thickness of the second spherical material in the second coating is 2.5-7.5 µm, such as 2.5 µm, 3 µm, 3.5 µm, 4 µm, 4.5 µm, 5 µm, 5.5 µm, 6 µm, 6.5 µm, 7 µm, 7.5 µm, etc.

In the present disclosure, by adjusting the coating thickness of the second spherical material, the thickness of the asymmetric composite separator meets the cell design requirements. Too small a thickness will lead to a thin electrode assembly, causing shaking after being inserted into the casing; on the contrary, it will make it difficult for the electrode assembly to be inserted into the casing.

In a second aspect, the present disclosure provides a method for preparing the asymmetric composite separator according to the first aspect, which includes the following steps:

subjecting the first spherical material grafted with hydrophilic groups, a first binder and water to a first mixing to obtain a first coating slurry, then coating the first coating slurry on one side of the base film, and obtaining the first coating after a first drying; and

subjecting the second spherical material, ceramic particles, a second binder and water to a second mixing to obtain a second coating slurry, then coating the second coating slurry on the other side of the base film, and obtaining the second coating after a second drying.

In one embodiment, the grafting method for the first spherical material grafted with hydrophilic groups includes an ultraviolet crosslinking method.

In one embodiment, in parts by weight, the parts by weight of the first spherical material grafted with hydrophilic groups are 5-10 parts, the parts by weight of the first binder are 3-12 parts, and the parts by weight of water are 78-92 parts.

In the present disclosure, the parts by weight of the first spherical material grafted with hydrophilic groups are 5-10 parts, such as 5 parts, 6 parts, 7 parts, 8 parts, 9 parts, 10 parts, etc.

In the present disclosure, the parts by weight of the first binder are 3-12 parts, such as 3 parts, 4 parts, 5 parts, 6 parts, 7 parts, 8 parts, 9 parts, 10 parts, 11 parts, 12 parts, etc.

In the present disclosure, the parts by weight of water are 78-92 parts, such as 78 parts, 82 parts, 85 parts, 88 parts, 90 parts, 92 parts, etc.

In one embodiment, a method of the coating is gravure roll coating.

In one embodiment, a temperature of the first drying is carried out at 80°C for a time of 10 min.

In one embodiment, in parts by weight, the total parts by weight of the second spherical material and the ceramic particles are 35 parts, the parts by weight of the second binder are 6 parts, and the parts by weight of water are 59 parts.

In one embodiment, the mass ratio of the second spherical material to the ceramic particles is (3-12): (88-97), such as 3:88, 4:88, 6:90, 8:92, 10:95, 12:97, etc.

In one embodiment, a method of the coating is gravure roll coating.

In one embodiment, the second drying is carried out at a temperature of 85°C for a time of 15 min.

In a third aspect, the present disclosure provides a secondary battery, which includes a positive electrode sheet, a negative electrode sheet, an electrolyte and a separator, wherein the separator is the asymmetric composite separator according to the first aspect.

In the present disclosure, the assembly process of the secondary battery adopts a thermal composite lamination process. In the thermal composite lamination process, the first coating side of the composite separator is disposed on the positive electrode side, wherein the hot-pressing condition of the thermal composite roller for the composite separator is a temperature of 60-100°C, further optionally 90°C.

In the thermal composite lamination process, the second coating side of the composite separator is disposed on the negative electrode side, wherein the hot-pressing condition of the thermal composite roller for the separator is a temperature of 60-100°C, further optionally 90°C.

Compared with the prior art, the present disclosure has the following beneficial effects:

The present disclosure provides an asymmetric composite separator. By designing a composite separator with an asymmetric structure, on the one hand, a first spherical material grafted with hydrophilic groups is disposed on the positive electrode side to reduce the surface energy and the adhesion of the adhesive layer to the hot roller; on the other hand, a combination of ceramic particles and a second spherical material is disposed on the negative electrode side to achieve adhesion between the separator and the negative electrode, while improving the heat resistance of the separator itself. In addition, the adhesion between the second spherical material and the negative electrode is point contact, and there is a certain distance between the points, so that when the volume of the negative electrode expands and changes during the battery cycle, space is left for stress release, thereby reducing the problem of negative electrode material falling off caused by stress concentration when the volume of the negative electrode changes.

The asymmetric composite separator provided herein can simultaneously meet the adhesion requirements of the separator to the negative electrode and the positive electrode in the thermal composite process, without the problem of roller sticking during the preparation process. In addition, for a lithium battery prepared by the thermal composite process based on the asymmetric separator, not only is the negative electrode interface uniform without material falling off during disassembly at full charge, but the cycle performance of the battery is also greatly improved.

After reading and understanding the detailed description, other aspects can be understood.

### BRIEF DESCRIPTION OF THE DRAWINGS

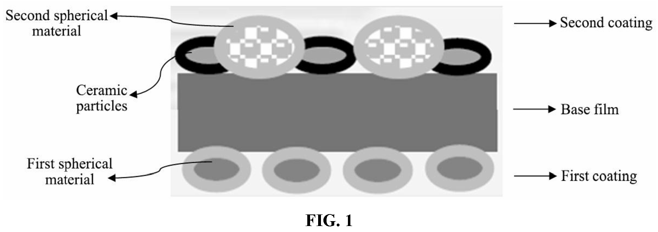

FIG. 1 is a schematic structural diagram of the asymmetric composite separator provided in Example 1.

### DETAILED DESCRIPTION OF THE EMBODIMENTS

The technical solutions of the present disclosure are further explained below in combination with the drawings and specific embodiments. Those skilled in the art should understand that the embodiments are only to help understand the present disclosure and should not be regarded as specific limitations on the present disclosure.

### Example 1

This example provides an asymmetric composite separator. As shown in FIG. 1, the asymmetric composite separator includes a base film (a wet-process separator as the base film, with a thickness of 9 µm and a porosity of 40%, purchasable from Shanghai Energy New Materials Technology Co., Ltd.), a first coating disposed on one side of the base film, and a second coating disposed on the other side of the base film, wherein the first coating includes spherical polyvinylidene fluoride materials grafted with acrylic acid groups, and the second coating includes a combination of boehmite particles and spherical styrene-acrylic latex materials.

The average particle size of the spherical polyvinylidene fluoride materials grafted with acrylic acid groups in the first coating is 185 nm, the grafting ratio is 3%, the coating areal density is 0.5 g/m², and the coating thickness is 1.2 µm; and the average particle size of the spherical styrene-acrylic latex materials in the second coating is 500 nm, the spherical styrene-acrylic latex materials are distributed in the second coating in an island-like form, the coverage rate of the spherical styrene-acrylic latex materials in the second coating is 5%, the coating thickness of the boehmite particles is 2 µm, and the coating thickness of the spherical styrene-acrylic latex materials is 5.5 µm.

This example also provides a preparation method for the above asymmetric composite separator, which includes the following steps:
Grafting acrylic acid monomers on the surface of spherical polyvinylidene fluoride materials (purchasable from Sinochem Lantian Co., Ltd.) by an ultraviolet crosslinking method to obtain spherical polyvinylidene fluoride materials grafted with acrylic acid groups. In parts by weight, subjecting 10 parts of spherical polyvinylidene fluoride materials grafted with acrylic acid groups, 5 parts of polyacrylic acid binder and 85 parts of deionized water to a first mixing to obtain a first coating slurry, then coating the first coating slurry on one side of the base film with a gravure roll, and followed by drying at 80°C for 10 min to obtain the first coating;
In parts by weight, subjecting 35 parts of the total weight of spherical styrene-acrylic latex materials (purchasable from Haodian Technology Co., Ltd.) and boehmite particles (wherein the mass ratio of spherical styrene-acrylic latex materials to boehmite particles is 5:95), 6 parts of polyacrylic acid binder and 59 parts of deionized water to a second mixing to obtain a second coating slurry, then coating the second coating slurry on the other side of the base film with a gravure roll, and followed by drying at 85°C for 10 min to obtain the second coating.

### Example 2

This example provides an asymmetric composite separator, which includes a base film (a wet-process separator as the base film, with a thickness of 9 µm and a porosity of 40%, purchasable from Shanghai Energy New Materials Technology Co., Ltd.), a first coating disposed on one side of the base film, and a second coating disposed on the other side of the base film, wherein the first coating includes spherical polyvinylidene fluoride materials grafted with acrylic acid groups, and the second coating includes a combination of boehmite particles and spherical styrene-acrylic latex materials.

The average particle size of the spherical polyvinylidene fluoride materials grafted with acrylic acid groups in the first coating is 200 nm, the grafting ratio is 2%, the coating areal density is 0.5 g/m², and the coating thickness is 0.8 µm; and the average particle size of the spherical styrene-acrylic latex materials in the second coating is 400 nm, the spherical styrene-acrylic latex materials are distributed in the second coating in an island-like form, the coverage rate of the spherical styrene-acrylic latex materials in the second coating is 4%, the coating thickness of the boehmite particles is 2 µm, and the coating thickness of the spherical styrene-acrylic latex materials is 3 µm.

This example also provides a preparation method for the above asymmetric composite separator, which includes the following steps:
Grafting acrylic acid monomers on the surface of spherical polyvinylidene fluoride materials (purchasable from Sinochem Lantian Co., Ltd.) by an ultraviolet crosslinking method to obtain spherical polyvinylidene fluoride materials grafted with acrylic acid groups. In parts by weight, subjecting 10 parts of spherical polyvinylidene fluoride materials grafted with acrylic acid groups, 5 parts of polyacrylic acid binder and 85 parts of deionized water to a first mixing to obtain a first coating slurry, then coating the first coating slurry on one side of the base film with a gravure roll, and followed by drying at 80°C for 10 min to obtain the first coating;
In parts by weight, subjecting 35 parts of the total weight of spherical styrene-acrylic latex materials (purchasable from Haodian Technology Co., Ltd.) and boehmite particles (wherein the mass ratio of spherical styrene-acrylic latex materials to boehmite particles is 5:95), 6 parts of polyacrylic acid binder and 59 parts of deionized water to a second mixing to obtain a second coating slurry, then coating the second coating slurry on the other side of the base film with a gravure roll, and followed by drying at 85°C for 10 min to obtain the second coating.

### Example 3

This example provides an asymmetric composite separator, which includes a base film (a wet-process separator as the base film, with a thickness of 9 µm and a porosity of 40%, purchasable from Shanghai Energy New Materials Technology Co., Ltd.), a first coating disposed on one side of the base film, and a second coating disposed on the other side of the base film, wherein the first coating includes spherical polyvinylidene fluoride materials grafted with acrylic acid groups, and the second coating includes a combination of boehmite particles and spherical styrene-acrylic latex materials.

The average particle size of the spherical polyvinylidene fluoride materials grafted with acrylic acid groups in the first coating is 250 nm, the grafting ratio is 4%, the coating areal density is 0.6 g/m², and the coating thickness is 1.2 µm; and the average particle size of the spherical styrene-acrylic latex materials in the second coating is 550 nm, the spherical styrene-acrylic latex materials are distributed in the second coating in an island-like form, the coverage rate of the spherical styrene-acrylic latex materials in the second coating is 8%, the coating thickness of the boehmite particles is 2.5 µm, and the coating thickness of the spherical styrene-acrylic latex materials is 7 µm.

This example also provides a preparation method for the above asymmetric composite separator, which includes the following steps:
Grafting acrylic acid monomers on the surface of spherical polyvinylidene fluoride materials (purchasable from Sinochem Lantian Co., Ltd.) by an ultraviolet crosslinking method to obtain spherical polyvinylidene fluoride materials grafted with acrylic acid groups. In parts by weight, subjecting 10 parts of spherical polyvinylidene fluoride materials grafted with acrylic acid groups, 5 parts of polyacrylic acid binder and 85 parts of deionized water to a first mixing to obtain a first coating slurry, then coating the first coating slurry on one side of the base film with a gravure roll, and followed by drying at 80°C for 10 min to obtain the first coating;
In parts by weight, subjecting 35 parts of the total weight of spherical styrene-acrylic latex materials (purchasable from Haodian Technology Co., Ltd.) and boehmite particles (wherein the mass ratio of spherical styrene-acrylic latex materials to boehmite particles is 5:95), 6 parts of polyacrylic acid binder and 59 parts of deionized water to a second mixing to obtain a second coating slurry, then coating the second coating slurry on the other side of the base film with a gravure roll, and followed by drying at 85°C for 10 min to obtain the second coating.

### Example 4

The difference between this example and Example 1 is that the grafting ratio of the spherical polyvinylidene fluoride materials grafted with acrylic acid groups in the first coating is 1%, and the others are the same as those in Example 1.

### Example 5

The difference between this example and Example 1 is that the grafting ratio of the spherical polyvinylidene fluoride materials grafted with acrylic acid groups in the first coating is 8%, and the others are the same as those in Example 1.

### Example 6

The difference between this example and Example 1 is that the coating areal density of the spherical polyvinylidene fluoride materials grafted with acrylic acid groups in the first coating is 0.1 g/m², and the others are the same as those in Example 1.

### Example 7

The difference between this example and Example 1 is that the coating areal density of the spherical polyvinylidene fluoride materials grafted with acrylic acid groups in the first coating is 1 g/m², and the others are the same as those in Example 1.

### Example 8

The difference between this example and Example 1 is that the coverage rate of the spherical styrene-acrylic latex materials in the second coating is 1%, and the others are the same as those in Example 1.

### Example 9

The difference between this example and Example 1 is that the coverage rate of the spherical styrene-acrylic latex materials in the second coating is 15%, and the others are the same as those in Example 1.

### Example 10

The difference between this example and Example 1 is that the coating thickness of the boehmite particles in the second coating is 1 µm, the coating thickness of the spherical styrene-acrylic latex materials is 10 µm, and the others are the same as those in Example 1.

### Example 11

The difference between this example and Example 1 is that the coating thickness of the boehmite particles in the second coating is 6 µm, the coating thickness of the spherical styrene-acrylic latex materials is 1 µm, and the others are the same as those in Example 1.

### Comparative Example 1

This comparative example provides a commercial adhesive-coated separator product of Shanghai Energy New Materials Technology Co., Ltd., with a product specification of 9+2+1+1, wherein 9 represents the thickness of the wet-process separator base film with a porosity of 40%; 2 represents a single-side coated boehmite ceramic material of 2 µm; 1+1 represents a polyvinylidene fluoride coating product with a symmetrical structure coated on the outermost two sides of the separator, wherein the polyvinylidene fluoride powder adopts the polyvinylidene fluoride of Sinochem Lantian brand, and the coating thickness on both sides is 1 µm.

### Comparative Example 2

The difference between this comparative example and Example 1 is that both the first coating and the second coating include spherical polyvinylidene fluoride materials grafted with acrylic acid groups, and the others are the same as those in Example 1.

### Comparative Example 3

The difference between this comparative example and Example 1 is that both the first coating and the second coating include a combination of boehmite particles and spherical styrene-acrylic latex materials, and the others are the same as those in Example 1.

### Examples 1 to 11 and Comparative Examples 1 to 3

The asymmetric composite separators provided in Examples 1 to 11 and Comparative Examples 1 to 3 are assembled into lithium-ion batteries, and the preparation method is as follows:
Preparation of positive electrode sheet: preparing slurry with lithium iron phosphate, coating the slurry onto a carbon-coated aluminum foil and processing to obtain a positive electrode sheet, wherein the proportion of the positive electrode in the coating is 96.55%, and the rest are 2.2% polyvinylidene fluoride binder, 1% conductive carbon black and 0.25% carbon nanotubes.

Preparation of negative electrode sheet: preparing slurry with artificial graphite, coating the slurry on a copper foil and processing to obtain a negative electrode sheet, wherein the proportion of the negative electrode in the coating is 96.1%, and the rest are 1.1% sodium carboxymethyl cellulose binder, 1% conductive carbon black and 1.8% styrene-butadiene rubber latex.

Preparation of electrode assembly: bonding the asymmetric composite separator and the negative electrode using a thermal composite process by hot-roll pressing at a hot-roll temperature of 90°C, cutting the unit formed after hot pressing into single pieces with a hot cutting knife to form a sandwich structure of separator-negative electrode-separator, stacking the sandwich structure and the positive electrode sheet into an electrode assembly in a lamination manner, and then hot-pressing using a flat-plate hot press at 90°C to complete the preparation of the electrode assembly.

Encapsulation and electrolyte injection: adopting a soft package form, encapsulating the prepared electrode assembly, and then injecting electrolyte.

Pre-charging and formation: pre-charging and forming the cell to prepare a lithium-ion battery.

### Test Conditions

The asymmetric composite separators provided in Examples 1 to 11 and Comparative Examples 1 to 3 are tested, and the test method is as follows:
Adhesion test: performing the adhesion test by folding the separator in half, with test conditions of temperature 90°C, an areal pressure of 1 Mpa, and a time of 60 s;
The lithium-ion batteries provided in Application Examples 1 to 11 and Comparative Application Examples 1 to 3 are tested, and the test method is as follows:
   Cycle performance test: performing cycle testing at 25°C with charging at a rate of 0.5C and discharging at a rate of 0.5C.

The test results are shown in Table 1.

**Table 1**

| | Adhesion (N/m) | Capacity Retention Rate (%) |
|---|---|---|
| Example 1 | 1.5 | 98.1 |
| Example 2 | 1.1 | 97.6 |
| Example 3 | 2.1 | 98.2 |
| Example 4 | 0.3 | 94.3 |
| Example 5 | 4.7 | 89.7 |
| Example 6 | 0.6 | 91.4 |
| Example 7 | 4.5 | 88.9 |
| Example 8 | 0.5 | 90.3 |
| Example 9 | 4.6 | 87.6 |
| Example 10 | 0.8 | 93.3 |
| Example 11 | 0.05 | 85.7 |
| Comparative Example 1 | 4.6 | 88.1 |
| Comparative Example 2 | 0.1 | 85.3 |
| Comparative Example 3 | 1.5 | Roller sticking during the preparation process, battery failure for assembly, no performance data |

It can be seen from Table 1 that the composite separators provided in Examples 1 to 3 of the present disclosure have good bonding properties, and the prepared batteries have high capacity retention rates.

Examples 4 to 11 show that exceeding the optional parameter range will cause the following problems: first, excessive adhesion leads to pore blocking of the separator and poor electrolyte wettability, resulting in low capacity retention rate of the battery; second, too low adhesion leads to poor fit between the separator and the electrode sheet, resulting in low capacity retention rate of the battery; third, coating roller sticking is easy to occur during the preparation process, resulting in abnormal battery production.

The applicant declares that the present disclosure illustrates the process method of the present disclosure through the above examples, but the present disclosure is not limited to the above process steps, which does not mean that the present disclosure must rely on the above process steps to be implemented. Those skilled in the art should understand that any improvement to the present disclosure, equivalent replacement of raw materials selected herein, addition of auxiliary components, selection of specific methods, etc., all fall within the protection scope and disclosure scope of the present disclosure.

## Claims

1. An asymmetric composite separator, wherein the asymmetric composite separator comprises a base film, a first coating disposed on one side of the base film, and a second coating disposed on the other side of the base film;
the first coating comprises a first spherical material grafted with hydrophilic groups; and
the second coating comprises a combination of ceramic particles and a second spherical material.

2. The asymmetric composite separator according to claim 1, wherein an average particle size of the first spherical material grafted with hydrophilic groups is 100-300 nm.

3. The asymmetric composite separator according to claim 2, wherein an average particle size of the first spherical material grafted with hydrophilic groups is 200 nm.

4. The asymmetric composite separator according to claim 1, wherein a monomer for grafting the hydrophilic groups comprise a fluorine-containing monomer and/or a non-fluorine-containing monomer;
the fluorine-containing monomer comprises any one or a combination of at least two of polyvinylidene fluoride, polytetrafluoroethylene, polyvinyl chloride, ethylene-tetrafluoroethylene copolymer, polychlorotrifluoroethylene or chlorotrifluoroethylene copolymer; and
the non-fluorine-containing monomer comprises any one or a combination of at least two of polymethyl methacrylate, polyethyl methacrylate, poly(methyl methacrylate-co-ethyl methacrylate), polybutyl methacrylate, styrene, phenylpropene, phenylpropanol, phenylpropanal or phenylpropionic acid.

5. The asymmetric composite separator according to claim 1, wherein a grafting ratio of the first spherical material grafted with hydrophilic groups is 2-4%.

6. The asymmetric composite separator according to claim 5, wherein the grafting ratio of the first spherical material grafted with hydrophilic groups is 3%.

7. The asymmetric composite separator according to claim 1 or 2, wherein a coating areal density of the first spherical material grafted with hydrophilic groups in the first coating is 0.3-0.7 g/m²; and
a coating thickness of the first spherical material grafted with hydrophilic groups in the first coating is 0.5-1.5 µm.

8. The asymmetric composite separator according to claim 1, wherein the ceramic particles comprise any one or a combination of at least two of aluminum oxide, boehmite, magnesium oxide or lithium aluminum titanium phosphate; and
an average particle size of the second spherical material is 400-600 nm.

9. The asymmetric composite separator according to claim 8, wherein the average particle size of the second spherical material is 500 nm.

10. The asymmetric composite separator according to claim 1, wherein the second spherical material is distributed in the second coating in an island-like form; and
a coverage rate of the second spherical material in the second coating is 3-10%.

11. The asymmetric composite separator according to claim 10, wherein the coverage rate of the second spherical material in the second coating is 5%.

12. The asymmetric composite separator according to claim 1, wherein the second spherical material comprises a non-fluorine-containing material; and
the non-fluorine-containing material comprises any one or a combination of at least two of styrene-acrylic compounds, polymethyl methacrylate, polyethyl methacrylate, poly(methyl methacrylate-co-ethyl methacrylate) or polybutyl methacrylate.

13. The asymmetric composite separator according to claim 1, wherein a coating thickness of the ceramic particles in the second coating is 1.5-3 µm.

14. The asymmetric composite separator according to claim 13, wherein the coating thickness of the ceramic particles in the second coating is 3 µm.

15. The asymmetric composite separator according to claim 1, wherein a coating thickness of the second spherical material in the second coating is 2.5-7.5 µm.

16. A method for preparing the asymmetric composite separator according to any one of claims 1-15, wherein the method comprises the following steps:
subjecting the first spherical material grafted with hydrophilic groups, a first binder and water to a first mixing to obtain a first coating slurry, then coating the first coating slurry on one side of the base film, and obtaining the first coating after a first drying; and
subjecting the second spherical material, ceramic particles, a second binder and water to a second mixing to obtain a second coating slurry, then coating the second coating slurry on the other side of the base film, and obtaining the second coating after a second drying.

17. The method according to claim 16, wherein a grafting method for the first spherical material grafted with hydrophilic groups comprises an ultraviolet crosslinking method;
in parts by weight, the parts by weight of the first spherical material grafted with hydrophilic groups are 5-10 parts, the parts by weight of the first binder are 3-12 parts, and the parts by weight of water are 78-92 parts;
a method of the coating is gravure roll coating; and
a temperature of the first drying is carried out at 80°C for a time of 10 min.

18. The method according to claim 16, wherein in parts by weight, total parts by weight of the second spherical material and the ceramic particles are 35 parts, the parts by weight of the second binder are 6 parts, and the parts by weight of water are 59 parts;
a mass ratio of the second spherical material to the ceramic particles is (3-12): (88-97);
a method of the coating is gravure roll coating; and
the second drying is carried out at a temperature of 85°C for a time of 15 min.

19. A secondary battery, comprising a positive electrode sheet, a negative electrode sheet, an electrolyte and a separator, wherein the separator is the asymmetric composite separator according to any one of claims 1-15.
